Europäisches Patentamt

European Patent Office

Office européen des brevets

(11) Publication number: **0 157 352**
**B1**

## (12) EUROPEAN PATENT SPECIFICATION

(45) Date of publication of patent specification: 26.09.90

(51) Int. Cl.⁵: **F 16 F 15/02, F 16 M 7/00**

(21) Application number: **85103617.8**

(22) Date of filing: **27.03.85**

---

(54) Machine damper.

---

(30) Priority: **29.03.84 US 594975**

(43) Date of publication of application:
**09.10.85 Bulletin 85/41**

(45) Publication of the grant of the patent:
**26.09.90 Bulletin 90/39**

(84) Designated Contracting States:
**BE DE FR GB IT NL SE**

(56) References cited:
**DE-A-2 718 347**
**DE-U-7 226 176**
**FR-A-1 535 965**
**FR-A-2 143 405**
**FR-A-2 173 441**
**FR-A-2 238 093**
**NL-A-7 606 439**
**US-A-3 456 992**

**PATENT ABSTRACTS OF JAPAN, vol. 7, no. 120
(M-217) 1265r, 25th May 1983 & JP - A - 58 37
313 (MITSUBISHI JUKOGYO K.K.) 04-03-1983**

(73) Proprietor: **Cincinnati Milacron Inc.
(a Delaware Corporation), 4701 Marburg Avenue
Cincinnati, Ohio 45209 (US)**

(72) Inventor: **Hasz, John Robert
4820 Murray Corner Road
Fayetteville Ohio 45118 (US)**
Inventor: **Piotrowski, Tadeusz
494 Brunswick Circle
Cincinnati Ohio 45240 (US)**

(74) Representative: **Lally, William et al
FORRESTER & BOEHMERT Widenmayerstrasse
4/I
D-8000 München 22 (DE)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

In machine tool design it is frequently necessary to provide a plurality of machinery levelling pads at the base of the machine to accomplish levelling of the machine with respect to a floor. Generally, the pads consist of a bracket on the machine which may be threaded and fitted with an adjusting screw to adjust the bracket in a vertical direction relative to the floor. After reaching a desired level height, the screw is clamped with a locknut. Sometimes a second, holddown locking screw may be fitted through a bore in the centre of the adjusting screw and secured in the floor and clamped against the adjusting screw, to prevent machine movement after levelling. This latter basic adjusting technique is well-known in the prior art, and suffers from several disadvantages, one being that the tight connection to the floor which is accomplished may possibly cause vibrations from the machine to be transmitted to the floor and to other adjacent mechanisms, and the reverse.

As a means for controlling vibrations to and from machinery, isolators have been developed, which generally consist of visco-elastic elements such as rubber sheets and discs, and rubber-like synthetic elements. These isolators are generally fitted, in one well-known case, as a grommet attached to the foot of a motor to isolate it from the motor mount member. An isolator serves to attenuate vibrations occurring between the adjacent rigid structures such as a motor and machine base or floor, and thereby serves to keep unwanted vibrations from reaching a machine tool and affecting performance in an adverse manner.

Since many machine tool are complex structures themselves, having relatively movable parts and jointed assemblies, the isolators which may be provided at the machine foot do not serve to actively participate in the internal damping of the relative machine members in a substantial, controlled, manner. To accomplish damping and favourably affect the dynamic stiffness of the relative machine members, machine way dampers and various damping block assemblies have been employed which alter the spring-mass-damping characteristics of the individual machine members.

A known damper according to NL-A-7606439, primarily for supporting high speed rotary systems, comprises a first support assembly for securing to a machine, a second assembly providing ground support, load transmission means between the two support assemblies, and a damping chamber operative between the two support assemblies.

Applicant has approached the problem of machine damping through analysis of the machine members in a complex machine assembly, and has invented a system wherein damping may be furnished to a machine structure in a controlled manner through use of a novel damper employed at the machine feet in a modular manner, to isolate the machine and damp developed machine vibrations.

According to this invention there is provided a machine damper comprising:

(a) a first support assembly for securing to the machine;

(b) a second support assembly;

(c) load transmission means extending between the first and second assemblies; and

(d) a damping chamber between the two support assemblies having a damping medium therein to damp the vibration of the first support assembly;

characterised in that the load transmission means comprises a plurality of elongate members disposed about a load bearing axis and which are sufficiently stiff in the axial direction to transmit the weight from the first support assembly to the second support assembly, but which are sufficiently flexible to permit lateral vibration of the first support assembly with respect to the second support assembly.

The elongate members may be in compression or intention.

Advantageously the damping chamber is provided between respective members of the first and second support assemblies, and preferably said members define a damping chamber which is or which comprises a portion which is cylindrical and which extends around a load bearing axis, and advantageously a portion in the form of an annular disc which extends around the load bearing axis.

The damping medium may be visco-elastic, or may be of viscous material, in the latter case sealing means advantageously being provided to prevent escape of damping medium from the or each damping chamber.

According to this invention there is also provided a machine comprising a plurality of damping devices as set out above disposed around the periphery of the machine, said devices supporting the weight of the machine and damping vibrations thereof.

There will now be given a detailed description, to be read with reference to the accompanying drawings, of five constructions of machine damper which have been selected for the purpose of illustrating this invention by way of example.

In the accompanying drawings:-

FIGURE 1 is an isometric view of a machine tool structure employing the present invention.

FIGURE 2 is a fragmentary cross-section of a prior art machine levelling device;

FIGURE 3 is a fragmentary cross-section of a first embodiment of the present invention taken along the line 3-3 of Figure 1;

FIGURE 4 is a fragmentary cross-section of a portion of Figure 3 on a larger scale;

FIGURE 5 is an exploded view of the parts shown in Figure 3 generally on the same scale as Figure 3;

FIGURE 6 is a fragmentary cross-section similar to Figure 4, showing modification of the parts as a second embodiment of this invention;

FIGURE 7 is an exploded view of the parts shown in Figure 6 on a smaller scale;

FIGURE 8 is a fragmentary view in cross-section of a third embodiment of this invention;

FIGURE 9 is an exploded view of the parts shown in Figure 8 on a smaller scale;

FIGURE 10 is a fragmentary cross-section of a fourth embodiment of this invention;

FIGURE 11 is an exploded view of the parts shown in Figure 10 on a smaller scale;

FIGURE 12 is the section of Figure 4 depicting a fifth embodiment.

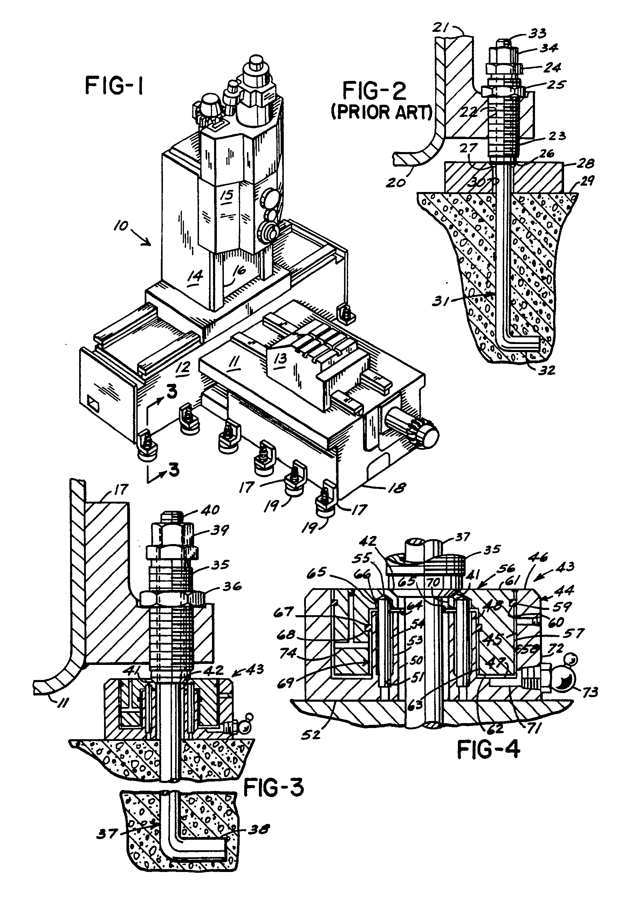

Referring to the drawings, Figure 1 shows an isometric view of a machine tool having two joined bases 11, 12 which carry slides 13, 14, respectively, wherein one slide 13 is adapted for carrying a workpiece (not shown) and the other slide 14 carries a movable spindle carrier 15 on its own set of slideways 16. The machine tool 10 has a plurality of angle brackets 17 fastened to its respective bases 11, 12 at the lower edge 18, and the angle brackets 17 are fitted with levelling screw assemblies 19 to adjust the bases 11, 12 with respect to the floor.

Figure 2 details a prior art assembly, wherein a machine base 20 has an angle bracket 21 secured thereto, and the angle bracket 21 has a threaded hole 22 which receives therein a tubular threaded screw 23, having a hexagonal head 24 and a jam nut 25 to lock the screw 23 with respect to the angle bracket 21 when the desired level of the base 20 with respect to the floor is attained. The bottom edge 26 of the screw 23 is chamfered and is situated in a conical seat 27 in a plate 28 on the floor 29 which serves to distribute the stress of the supported load. The plate 28 has a clearance hole 30 drilled through the centre, and a stud 31 is grouted at one end 32 into the floor securely, and extends through the centre of the tubular threaded screw 23. The top end 33 of the stud 31 is threaded and receives a locknut 34 thereon, so that when the final adjustment of the angle bracket 21 is attained, the entire structure: angle bracket 21; screw 23; plate 28; and floor 29 are secured together by the locknut 34 which is tightend on the stud 31. When the assembly is secured, a rigid, generally non-movable structure is attained, wherein the angle bracket 21 and base 20 cannot move up or down or in a sideways direction.

The assembly in Figure 3 illustrates a base 11 of Figure 1, with a respective angle bracket 17, which is typical of all the angle brackets 17 in Figure 1. The angle bracket 17 is fitted with an adjusting screw 35, which is tubular as in the prior art assembly, and the adjusting screw 35 is locked in a set adjustment by means of a jam nut 36 threadably received on the screw 35 and tightened against the angle bracket 17. Also similar to Figure 2 prior art assembly, the assembly utilises a locking stud 37 which is grouted at one end 38 into the floor securely and extends upwards through the tubular adjusting screw 35 so that the entire assembly may be pulled up snuggly by means of a locknut 39 at the upper end 40 of the threaded stud 31. The bottom 41 of the adjusting screw 35 is tapered and received in a cooperating chamfered bore 42 of a plate assembly 43 which will be discussed further in connection with Figure 4.

The plate assembly 43 detailed in Figure 4 is comprised of a housing 44 which is a cylindrical member having an internal cavity or bore 45 extending from the top surface 46 down to a bottom internal surface 47, and the internal surface 47 extends radially inward to a boss section 48 having an axial length 49 which is shorter than the internal bore depth. The boss section 48 has a clearance hole 50 machined through the central axis, to accommodate the hold-down stud 37. The boss section 48 further has a plurality of pin bores 51 radially spaced about the central axis, which extend down to a bottom surface proximate to the bottom 52 of the plate assembly 43. The pin bores 51 have coaxial clearance holes 53 machined throughout the majority of their length so that support pins 54 may be received in the bores 51, and the pins 54 may accommodate a slight amount of sideways deflection at their outermost ends 55 within the confines of the clearance holes 53. The pins 54 extend upwardly beyond the boss section 48, and terminate as shallow conical points at their outermost ends 55. A secondary support member 56 having an accurately machined outer diameter 57 is received in the bore 45 of the housing 44, and is fitted so that a peripheral boundary space 58 is maintained between the two 44, 56 in assembly. Here it should be noted that the cavity 45 may be of a shape other than cylindrical, and the secondary support member 56 is cooperatively adapted to conform to the cavity shape. In the case of cylindrical shapes, the peripheral boundary space 58 would be an annular space. A seal ring 59 is provided in a suitable groove 60 near the topmost end 61 of the secondary member 56 to seal the annular space 58 as a closed chamber. The bottom surface 62 of the second member 56 is maintained at a spaced dimension away from the bottom surface 47 of the bore 45 by the construction of an internal bore 63 in the second member 56 which is adapted to follow the contour of the boss section 48. The internal bore 63 terminates at an internal surface 64, extending across the top 65 of the boss section 48. The internal surface 64 has a plurality of radially spaced blind holes 65, the bottoms 66 of which are adapted to fit the conical ends 55 of the support pins 54. By careful dimensioning of the depth of the blind holes 65 relative to the bottom surface 62 of the second support member 56, the spacing of the bottom surface 62 of the second support member 56 from the housing 44 is maintained. A seal 67 is provided in an internal groove 68 in the bore 63 around the boss section 48 so as to maintain an inner peripheral boundary space 69 as well as an outer space 58. The second support member 56 is provided with a clearance hole 70 though its central axis, and a topmost tapered countersunk hole 42 in which to receive the bottom tapered surface 41 of the adjusting screw 35. A cross drilled and tapped hole 71 is provided radially though the outer surface 72 of the housing 44 at the bottom surface 47 which extends into communication with the spaces 58, 68. The threaded portion of the hole is fitted with a grease fitting 73 through which may be pumped a thick, highly viscous, grease or oil. Additional cross-drilled holes 74 serve to facilitate grease movement in the spaces 58, 69.

By the assembly shown in Figure 4, the vertical load of the base 11 and the angle bracket 17 of the machine 10 is therefore carried through the adjusting screw 35 and second support member 56, to the support pins 54, which serve as very stiff axial compression springs. The support pins 54, as compression springs, are relatively flexible in a lateral direction, within the confines of the clearance holes 53, and therefore serve to permit the adjusting screw 35 — second support member 56 combination to translate a small amount in horizontal directions under the influence of machine vibrations. This horizontal radial movement of the secondary support member 56 relative to the housing 44, serves to change the boundary spaces 58, 69 at certain moments, thereby forcing the resistant viscous medium out of a decreased gap of one portion of the space 58, 59 and around into a widened portion of the space 58, 69. When movement is reversed, the tension-holding power of the viscous medium, resists widening of the decreased gap of the boundary space 58, 69. The assembly thereby undergoes what is known as squeeze-film damping, thus tending to increase machine dynamics stiffness, while at the same time, retaining a desired level of machine adjustment.

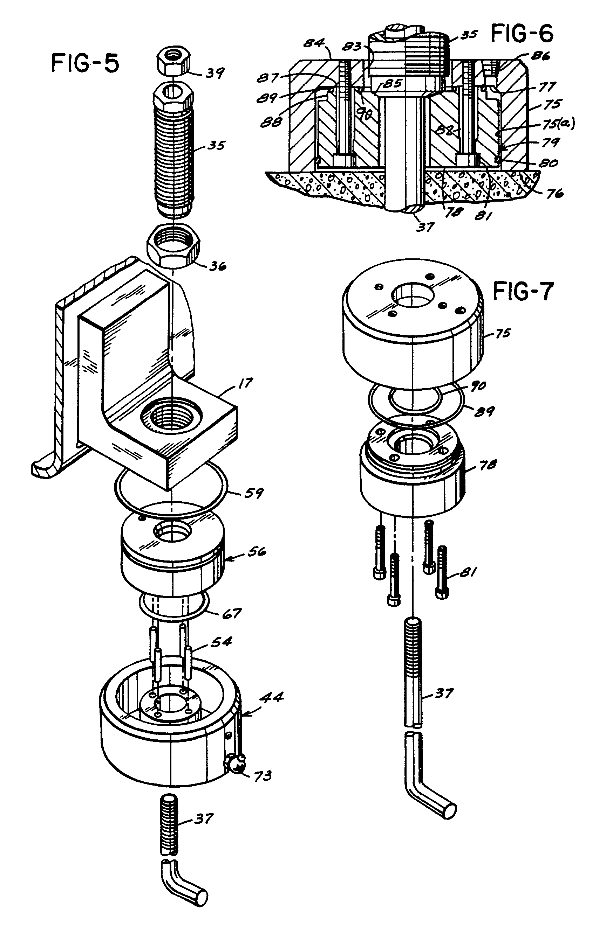

Figure 5 is an exploded view of the elements of Figures 3 and 4.

Figure 6 depicts a second embodiment of the invention having an inverted support arrangement. The internal bore 75(a) of the base support member 75 extends from the bottom surface 76 up to a bore end surface 77, and the second support member 78 is accurately fitted and carried within the bore 75(a), so as to maintain an annular boundary space 79 between the two 75, 78. The second member 78 is fitted with a seal ring 80 so that the annular space 79 will comprise a closed chamber. Cap screws 81 are threaded into, and extend from the bore end surface 77 of the base support member 75 though clearance holes 82 provided in the second member 78. The adjusting screw 35 is passed through a clearance hole 83 in the top section 84 of the base member 75, and bears on the top countersunk, surface 85 of the second support member 78, so that the screws 81 are loaded in tension, functioning as very stiff extension springs. The cap screw holes 82 are of ample clearance to permit slight movement of the head of the cap screw 81 with respect to its threaded portion so that some radial compliance may be effected between the two members 75, 78. A pipe-tapped hole 86 is provided through top section 84 of the base member 75, so that viscous material may be introduced by conventional means into the annular space 79. The top portion 87 of the second member 78 is provided with a reduced diameter 88 to facilitate entry of the viscous medium, and a suitable seal 89 is provided about the top portion 86 to enclose the annular space 79. A secondary seal 90 is also provided about the top portion 86 at the clearance hole 83. By similar function to that described in conjunction with Figure 4, some horizontal movement of the inner member 78 with respect to the outer member 75 is accommodated under the influence of machine vibrations, while the vertical stock or adjustment is maintained. Likewise, the phenomenon of squeeze-film damping is appreciated when the inner member 78 moves relative to the outer member 75 thus forcing the viscous medium to undergo visco-elastic and positional changes in the annular space 79. The exploded view of Figure 7 illustrates the elements of Figure 6.

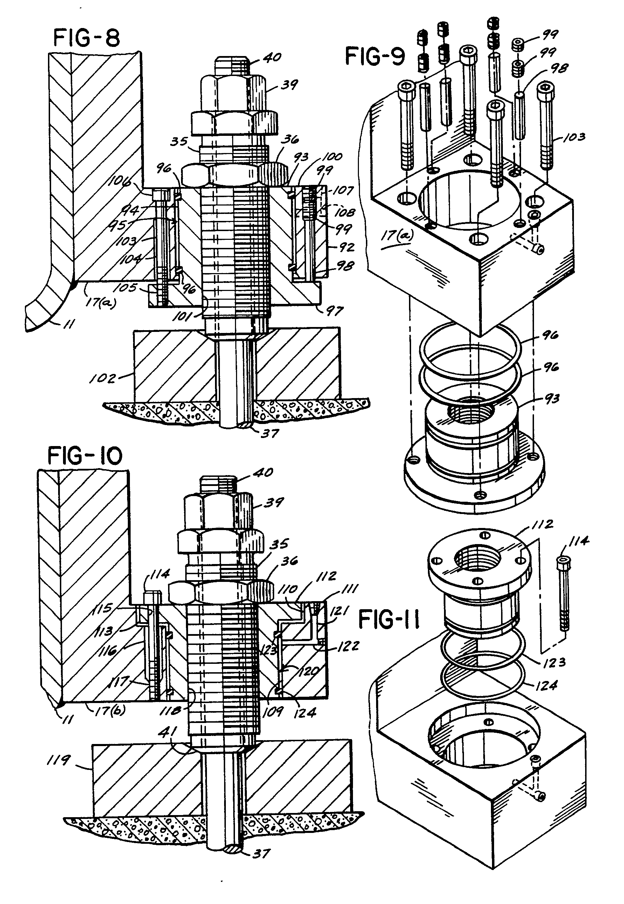

The section view of Figure 8 depicts a third embodiment, wherein the angle bracket 17(a) of the machine base 11 becomes the outer member of the damping assembly, having a bore 91 machined through its flange section 92. A cooperating inner support member 93 is received in the bore 91, and has its outer diameter 94 closely dimensioned to maintain an annular space 95 between the two 91, 94. A pair of seals 96 are provided along the diameter 94 of the inner member 93, to seal the annular space 95 into an annular chamber. The bottom of the inner member 93 has a circular flange 97. A plurality of pins 98 are carried in the angle bracket flange section 92, which are backed up by lock screws 99 at the upper end 100 of the flange section 92, so that the load transmitted by the machine base 11 through the angle bracket 17(a), is borne by the support pins 98 which extend against the flange 97 of the inner member 93. The inner member 93 has a central threaded hole 101, through which is received the adjusting screw 35 and its jam nut 36. The adjusting screw 35 is carried in a conventional manner as with the prior art, against a base plate 102 which rests against the floor, while the locking stud 37 extends upwardly from the floor through the centre of the adjusting screw 35, and receives the locknut 39 at its upper end 40. The support pins 98 function as stiff compression springs, which serve to carry the vertical load of the machine base 11. A plurality of cap screws 103 extend downward from the angle bracket flange section 92, and are threadably received in the flange 97 of the inner member 93, to snug the assembly together. Suitable clearance holes 104 are provided in the angle bracket flange section 92 around the body of the screws 103, to permit some lateral movement of the threaded portion 105 of the screw 103 relative to its head 106. Thus, under vibrational influence, the machine base 11 may undergo a slight amount of horizontal translational movement, relative to the inner support member 93, while the vertical stack, or adjustment, of the machine is maintained. The annular space 95 is filled with a viscous medium which is ported through cross-drilled filler holes 107, 108 machined in the flange section 92 of the angle bracket 17(a). The viscous medium causes the phenomenon of squeeze film damping to occur as the inner and outer members 93, 17(a) are relatively moved with respect to one another within the limits of the annular space 95. The exploded view of Figure 9 illustrates the elements of Figure 8.

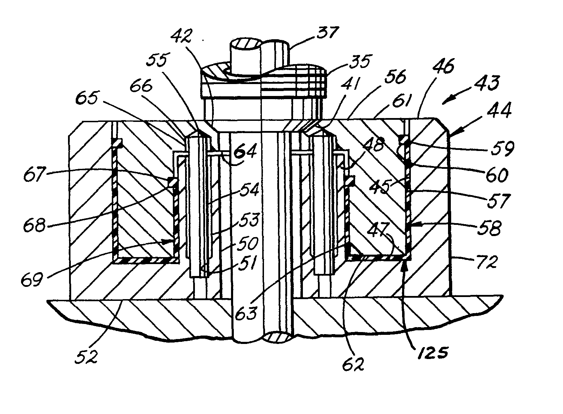

A fourth embodiment is shown in Figure 10, which depicts a section through an angle bracket 17(b) which functions as an outer member, having a central bore 109 machined therethrough and a counterbore 110 in its upper surface 111. An inner member 112 is received in the central bore 109 and has a top flange 113 which is cooperatingly adapted to the counterbore 110 of the angle bracket 17(b). A plurality of cop screws 114 extend downwardly through clearance holes 115 in the flange 113 of the inner member 112, then through clearance holes 116 which are machined along the body of the screw 114 in the angle bracket 17(b), terminating at a threaded portion 117 which receives the screw 114. The inner member 112 has a tapped hole 118 extending through its central axis which receives the adjusting screw 35 and jam nut 36 in a manner shown in the prior art, and the bottom 41 of the adjusting screw 35 is seated in a base plate 119 resting on the floor. The weight of the machine base 11 is supported by the cap screws 114, functioning as very stiff extension springs loaded in tension, and a small amount of lateral movement of the angle bracket 17(b) with respect to the inner support member 112 may be accommodated by the clearance holes 116 around the cap screws 114, and an annular space 120 formed between the bore 109 and inner member 112. The angle bracket 17(b) has a pair of intersecting cross-drilled holes 121, 122 which are topped to receive hydraulic fittings (not shown) for filling the annular space 120 with a viscous medium. The annular space 120 is sealed with upper and lower seals 123, 124 carried by the inner member 112. In assembly, therefore, a small amount of radial movement in a horizontal direction may occur while the stack or adjustment height of the angle bracket 17(b) with respect to the floor is maintained. The horizontal movement may be originated by machine vibrations which are damped by the viscous medium under the phenomenon of squeeze-film damping. The exploded view of Figure 11 illustrates the elements of Figure 10 in perspective.

A fifth embodiment is shown in Figure 12. A visco-elastic damping material 125, such as PVC (polyvinyl chloride), is substituted in the damping cavity 45 for the viscous medium. This type of material has the characteristic of being able to dissipate energy when displaced. The viscoelastic materials used in damping units behave quite definitely in an elastic manner up to some stress limit, but once that stress is exceeded, it flows until its area increases and stresses go down until it becomes elastic again.

The phenomenon of film squeeze damping occurs particularly in chambers having a thickness (in the preferred embodiments in the radial direction) of less than 0.63 mm (0.025 inches), but is particularly effective in chambers having a thickness in the order of 0.032 mm (0.005 inches) or less.

Strictly considered, in a damper designed for squeeze-film, the direct substitution of a visco-elastic material would result in somewhat less damping of the structure, but this may be suitable for some applications. The visco-elastic materials can have a damping capability 20 times that of rubber, but the squeeze-film damper can possess a damping capability three or four times that of the visco-elastic damper.

## Claims

1. A machine damper comprising:
(a) a first support assembly (17, 35, and 56/78/92/61) for securing to the machine;
(b) a second support assembly (43; 75; 93, 35, 102; 72);
(c) load transmission means (54; 82; 98, 103) extending between the first and second assemblies; and
(d) a damping chamber between the two support assemblies having a damping medium therein to damp the vibration of the first support assembly;
characterised in that the load transmission means comprises a plurality of elongate members (54; 82; 98: 103) disposed about a load bearing axis and which are sufficiently stiff in the axial direction to transmit the weight from the first support assembly to the second support assembly, but which are sufficiently flexible to permit lateral vibration of the first support assembly with respect to the second support assembly.

2. A machine damper according to Claim 1 wherein the elongate members (54) are in compression.

3. A damper according to Claim 1 wherein the elongate members (82) are in tension.

4. A damper according to any one of the preceding claims wherein the damping chamber (58, 79, 95, 69) is provided between respective members (43/56; 75/78; 92/93; 61/72) of the first and second support assemblies.

5. A damper according to Claim 4 wherein said members define a damping chamber which is or which comprises a portion which is cylindrical and which extends around the load bearing axis.

6. A damper according to one of Claims 4 and 5 wherein said members define a damping chamber which is or which comprises a portion in the form of an annular disc which extends around the load bearing axis.

7. A damper according to any one of the preceding claims wherein the damping medium is a visco-elastic material.

8. A damper according to any one of Claims 1 to 6 wherein the damping medium is a viscous material, sealing means (59, 67; 80, 89; 96; 123, 124) being provided to prevent escape of damping medium from the or each damping chamber (58, 69, 79, 95, 120).

9. A machine comprising a plurality of damping devices according to any one of the preceding claims disposed around the periphery thereof, said devices supporting the weight of the machine and damping vibrations thereof.

**Patentansprüche**

1. Maschinendämpfer, mit

(a) einer ersten Trägeranordnung (17, 35 und 56/78/92/61) zum Befestigen an der Maschine;

(b) einer zweiten Trägeranordnung (43; 75; 93, 35, 102; 72);

(c) einer Kraftübertragungseinrichtung (54; 82; 98, 103), die sich zwischen der ersten und der zweiten Anordnung erstreckt; und

(d) einer Dämpfungskammer zwischen den beiden Trägeranordnungen mit einem darin befindlichen Dämpfmedium zum Dämpfen der Schwingungen der ersten Trägeranordnung;

dadurch gekennzeichnet,

daß die Kraftübertragungseinrichtung eine Vielzahl von Dehngliedern (54; 82; 98; 103) aufweist, die um eine tragende Achse angeordnet sind und die in axialer Richtung hinreichend starr sind, um die Belastung von der ersten Trägeranordnung auf die zweite Trägeranordnung zu übertragen, die jedoch hinreichend flexibel sind, um seitliche Schwingungen der ersten Trägeranordnung in bezug auf die zweite Trägeranordnung zuzulassen.

2. Maschinendämpfer nach Anspruch 1, bei dem die Dehnglieder (54) auf Druck beansprucht sind.

3. Dämpfer nach Anspruch 1, bei dem die Dehnglieder (82) auf Zug beansprucht sind.

4. Dämpfer nach einem der vorangehenden Ansprüche, bei dem die Dämpfungskammer (58, 79, 95, 69) zwischen entsprechenden Teilen (43/56; 75/78; 92/93; 61/72) der ersten und zweiten Trägeranordnung vorgesehen ist.

5. Dämpfer nach Anspruch 4, bei dem die Teile eine Dämpfungskammer definieren, welche ein Abschnitt ist oder einen Abschnitt umfaßt, der zylindrisch ist und der sich um die tragende Achse erstreckt.

6. Dämpfer nach Anspruch 4 oder 5, bei dem die Teile eine Dämpfungskammer definieren, welche ein Abschnitt ist oder einen Abschnitt umfaßt, der die Form einer ringförmigen Scheibe hat und der sich um die tragende Achse erstreckt.

7. Dämpfer nach einem der vorangehenden Ansprüche, bei dem das Dämpfmedium ein visko-elastisches Material ist.

8. Dämpfer nach einem der Ansprüche 1 bis 6, bei dem das Dämpfmedium ein visko-elastisches Material ist, wobei Dichtvorrichtungen (59, 67; 80, 89; 123, 124) vorgesehen sind, um das Entweichen von Dämpfmedium aus der oder aus jeder Dämpfungskammer (58, 69, 79, 95, 120) zu verhindern.

9. Maschine mit einer Vielzahl von Dämpfungsvorrichtungen nach einem der vorangehenden Ansprüche, die an ihren Außenseiten angeordnet sind, wobei die Vorrichtungen das Gewicht der Maschine tragen und ihre Schwingungen dämpfen.

**Revendications**

1. Amortisseur de machine comprenant:

(a) un premier ensemble de support (17, 35 et 56/72/92/61) destiné à être fixé à la machine;

(b) un second ensemble de support (43; 75; 93, 35, 102; 72);

(c) des moyens de transmission de charge (54; 82; 98, 103) s'étendant entre les premier et second ensembles; et

(d) une chambre d'amortissement entre les deux ensembles de support contenant un agent d'amortissement pour amortir les vibrations du premier ensemble de support,

caractérisé en ce que les moyens de transmission de charge comprennent plusieurs organes allongés (54; 82; 98:103) disposés autour d'un axe de support de charge et qui sont suffisamment rigides en direction axiale pour transmettre le poids du premier ensemble de support au second ensemble de support, mais qui sont suffisamment flexibles pour permettre des vibrations latérales du premier ensemble de support par rapport au second ensemble de support.

2. Amortisseur selon la revendication 1, dans lequel les organes allongés (54) sont en compression.

3. Amortisseur de machine selon la revendication 1, dans lequel les organes allongés (82) sont en tension.

4. Amortisseur selon l'une quelconque des revendications précédentes, dans lequel la chambre d'amortissement (58, 79, 95, 69) est prévue entre les organes respectifs (43/56; 75/78; 92/93; 61/72) des premier et second ensembles de support.

5. Amortisseur selon la revendication 4, dans lequel lesdits organes définissent une chambre d'amortissement qui est ou qui comprend une portion qui est cylindrique et qui s'étend autour de l'axe de support de charge.

6. Amortisseur selon l'une des revendications 4 et 5, dans lequel lesdits organes définissent une chambre d'amortissement qui est ou qui comprend une portion ayant la forme d'un disque annulaire qui s'étend autour de l'axe de support de charge.

7. Amortisseur selon l'une quelconque des revendications précédentes, dans lequel l'agent d'amortissement est un matériau visco-élastique.

8. Amortisseur selon l'une quelconque des revendications 1 à 6, dans lequel l'agent d'amortissement est un matériau visqueux, des moyens d'étanchéité (59, 67; 80, 89; 96; 123, 124) étant prévus pour éviter l'échappement de l'agent d'amortissement de la ou de chaque chambre d'amortissement (58, 69, 79, 95, 120).

9. Machine comprenant plusieurs dispositifs d'amortissement selon l'une quelconque des revendications précédentes, disposés autour de sa périphérie, lesdits dispositifs supportant le poids de la machine et amortissant ses vibrations.

FIG-1

FIG-2
(PRIOR ART)

FIG-3

FIG-4

FIG-5

FIG-6

FIG-7

FIG-8

FIG-9

FIG-10

FIG-11